# EUROPEAN PATENT SPECIFICATION

(11) **EP 3 396 542 B1**
(45) Date of publication and mention of the grant of the patent: **13.09.2023**
(21) Application number: 16877621.9
(22) Date of filing: 13.12.2016
(51) Int. Cl.: G06F 9/46, G06F 16/2453, G06F 16/23, G06F 16/2458, G06F 9/52

(54) **DATABASE OPERATING METHOD AND DEVICE**
DATENBANKBETRIEBSVERFAHREN UND -VORRICHTUNG
PROCÉDÉ ET DISPOSITIF D'EXPLOITATION DE BASE DE DONNÉES

(30) Priority: 21.12.2015 CN 201510960860
(43) Date of publication of application: 31.10.2018
(73) Proprietor: Alibaba Group Holding Limited, Grand Cayman (KY)
(72) Inventor: WANG, Jingyu, Hangzhou Zhejiang 311121 (CN)
(74) Representative: Barker Brettell LLP
(86) International application number: PCT/CN2016/109653
(87) International publication number: WO 2017/107810

(56) References cited:
- CN-A- 101 587 447
- CN-A- 102 207 883
- CN-A- 102 508 834
- CN-A- 103 810 196
- US-A1- 2015 149 725
- ANDREW PAVLO ET AL: "On Predictive Modeling for Optimizing Transaction Execution in Parallel OLTP Systems", ARXIV.ORG, CORNELL UNIVERSITY LIBRARY, 201 OLIN LIBRARY CORNELL UNIVERSITY ITHACA, NY 14853, 30 October 2011 (2011-10-30), XP080536146, DOI: 10.14778/2078324.2078325
- EVAN P C JONES ET AL: "Low overhead concurrency control for partitioned main memory databases", PROCEEDINGS OF THE 2010 INTERNATIONAL CONFERENCE ON MANAGEMENT OF DATA, SIGMOD '10, ACM PRESS, NEW YORK, NEW YORK, USA, 6 June 2010 (2010-06-06), pages 603-614, XP058087499, DOI: 10.1145/1807167.1807233 ISBN: 978-1-4503-0032-2
- GENE PANG ET AL: "PLANET : making progress with commit processing in unpredictable environments", PROCEEDINGS OF THE 2014 ACM SIGMOD INTERNATIONAL CONFERENCE ON MANAGEMENT OF DATA, SIGMOD '14, 1 January 2014 (2014-01-01), pages 3-14, XP055582470, New York, New York, USA DOI: 10.1145/2588555.2588558 ISBN: 978-1-4503-2376-5

## Description

### Technical Field

The present disclosure relates to the field of database technologies, and, more particularly, to a database operating method and apparatus.

### Background

A database transaction refers to a series of operations executed as a single logical unit of work, which is either executed completely or not executed at all. One transaction is composed of a series of database operating instructions, such as Structured Query Language (SQL) statements. There are segmentation conditions and logic such as jump between the database operating instructions, which means that some of the database operating instructions in the transaction may be skipped in one execution procedure. However, in the conventional techniques, it is impossible to learn information such as segmentation conditions or jump logic of a transaction in advance. Therefore, the determination has to be made according to execution logic during the execution of the transaction, and statements in the transaction are executed in sequence to implement operations on the database. Such a transaction execution manner is inefficient and has low transaction throughput.

"On Predictive Modeling for Optimizing Transaction Execution in Parallel OLTP Systems" by Pavlo et al (2011) discusses an emerging class of parallel database management systems (DBMS) which is designed to take advantage of the partitionable workloads of on-line transaction processing (OLTP) applications. Transactions in these systems are optimized to execute to completion on a single node in a shared-nothing cluster without needing to coordinate with other nodes or use expensive concurrency control measures. But some OLTP applications cannot be partitioned such that all of their transactions execute within a single-partition in this manner. These distributed transactions access data not stored within their local partitions and subsequently require more heavy-weight concurrency control protocols. Further difficulties arise when the transaction's execution properties, such as the number of partitions it may need to access or whether it will abort, are not known beforehand. The DBMS could mitigate these performance issues if it is provided with additional information about transactions. The paper presents a Markov model-based approach for automatically selecting which optimizations a DBMS could use, namely (1) more efficient concurrency control schemes, (2) intelligent scheduling, (3) reduced undo logging, and (4) speculative execution. To evaluate the techniques, the models were implemented and integrated into a parallel, main-memory OLTP DBMS to show performance improvement of applications with diverse workloads.

### Summary

In many aspects, the present disclosure provides a database operating method and apparatus, to improve the transaction execution efficiency and increase the transaction throughput.

In an aspect, the present disclosure provides a database operating method as claimed in claim 1.

In another aspect, the present disclosure provides a database operating apparatus according to claim 8.

In another aspect, the present disclosure provides a machine readable medium according to claim 14.

On one hand, the techniques of the present disclosure determine in advance whether the target transaction is a stand-alone transaction or a distributed transaction; on the other hand, data may be prepared in advance, thus helping improve the transaction execution efficiency and further increasing the transaction throughput.

### Brief Description of the Drawings

In order to illustrate the technical solutions in the examples of the present disclosure more clearly, accompanying drawings required for describing the examples or the conventional techniques are briefly outlined below. Apparently, the accompanying drawings in the following description only depict some of the examples of the present disclosure, and for those of ordinary skill in the art, other drawings may be derived from these accompanying drawings without creative efforts.
FIG. 1 is a deployment diagram of a database application system in the conventional techniques;
FIG. 2 is a deployment diagram of a database application system according to an example of the present disclosure;
FIG. 3 is a schematic flowchart of a database operating method according to an example of the present disclosure; and
FIG. 4 is a schematic structural diagram of a database operating apparatus according to an example of the present disclosure.

### Detailed Description

To make the objectives, technical solutions and advantages of the examples of the present disclosure clearer, the technical solutions in the examples of the present disclosure will be clearly and completely described below with reference to the accompanying drawings in the examples of the present disclosure. It is apparent that the examples described merely represent some examples rather than all of the examples of the present disclosure. Based on the examples in the present disclosure, all other examples obtained by those of ordinary skill in the art without creative efforts should belong to the protection scope of the appended claims.

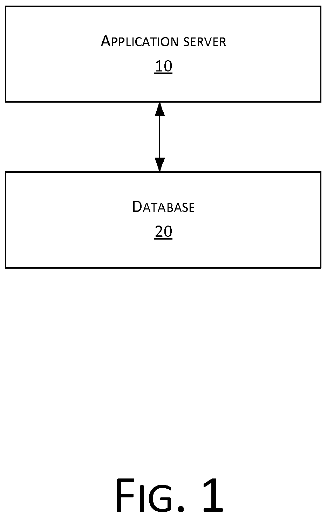

FIG. 1 is a deployment diagram of a database application system according to the conventional techniques. As shown in FIG. 1, the system includes an application server 10 and a database 20. There may be one or more application servers 10. There may also be one or more databases 20. FIG. 1 shows only one application server 10 and one database 20 as an example. When the database 20 needs to be accessed by means of a transaction, the application server 10 executes the transaction logic, and applies database operating instructions in the transaction to the database 20 in sequence. Such a transaction execution manner is inefficient and has low transaction throughput.

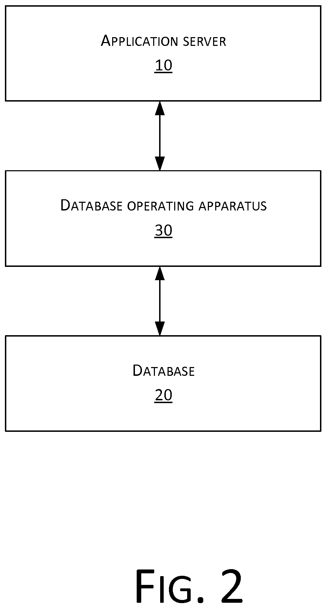

In view of the defects in the conventional techniques, the present disclosure provides a novel database application system, as shown in FIG. 2. In this system, a database operating apparatus 30 is added between the application server 10 and the database 20. The database operating apparatus 30 is configured to execute the database operating method provided by the present disclosure, to realize a new type of transaction execution logic, i.e., speculatively executing a target transaction based on a service logic code into which the target transaction is encapsulated, and then controlling the database 20 to actually execute the target transaction according to the service logic code into which the target transaction is encapsulated as well as a segmentation condition and an involved data range of the target transaction that are obtained in the process of the speculative execution.

The present disclosure obtains the segmentation condition of the target transaction through speculative execution, and determines a database or databases on which the target transaction should be executed, thereby ensuring the certainty of database consumption. On one hand, whether the transaction is a stand-alone transaction or a distributed transaction is determined in advance; on the other hand, data may be prepared in advance, thus helping improve the transaction execution efficiency and further increasing the transaction throughput. In addition, the present disclosure combines speculative execution with the service logic code. The service logic code includes execution logic of the target transaction. Therefore, the database does not need to be concerned about changes in a shared data set (i.e., data in the database). Serial and correct execution of the transaction may be ensured as long as the segmentation condition and the involved data range of the target transaction do not change, so that the rollback probability of the transaction may be reduced. The transaction throughput refers to the number of transactions processed per unit time.

It should be noted that the database operating apparatus 30 is actually a logic processing apparatus, which may be deployed alone and located between the application server 10 and the database 20, or may be deployed on the application server 10 for implementation or deployed on the database 20 for implementation.

The method process of the technical solution in the present disclosure will be described in detail in the following examples.

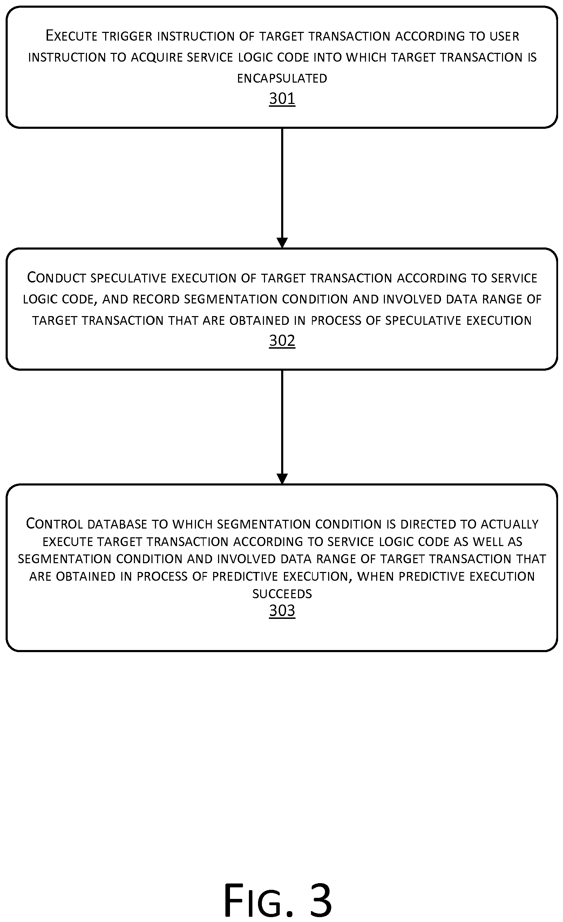

FIG. 3 is a schematic flowchart of a database operating method according to an example of the present disclosure. As shown in FIG. 3, the method includes the following steps:
301: A trigger instruction of a target transaction is executed according to a user instruction, to acquire a service logic code into which the target transaction is encapsulated.
302: The target transaction is speculatively executed according to the service logic code, and a segmentation condition and an involved data range of the target transaction that are obtained in the process of the speculative execution are recorded.
303: A database to which the segmentation condition is directed is controlled to actually execute the target transaction according to the service logic code as well as the segmentation condition and the involved data range of the target transaction that are obtained in the process of the speculative execution, when the speculative execution succeeds.

It should be noted first that for ease of description, a transaction that a user needs to execute is referred to as a target transaction in this example. The target transaction mainly includes instructions for operating the database. In addition to the database operating instructions, the target transaction further includes some control instructions for controlling execution states of the target transaction, for example, a transaction start instruction, a transaction commit instruction, a transaction rollback instruction, and so on. The instructions are actually statements written in a database language. Depending upon different database languages, the instructions may be statements written in different languages. For example, if SQL is adopted, the foregoing database operating instruction and control instructions are actually a series of SQL statements.

In this example, the target transaction needs to be encapsulated into a service logic code. The database operating instructions in the target transaction and information such as a jump condition and logic between database operating instructions are encapsulated in the service logic code. That is, in the process of the speculative execution and the process of actual execution, the execution logic of the entire target transaction is controlled by the database operating apparatus and the database respectively.

The service logic code needs to be deployed on the database operating apparatus and each database in advance, and is pre-compiled. In actual use of the service logic code, a name of the service logic code is only needed to provide once. Compared with constant transmission of database operating instructions, this method helps reduce network traffic and save network resources. Optionally, if the service logic code further requires input parameters, the required input parameters may also be provided in addition to the name of the service logic code. For example, the user may provide the name of the service logic code to the database operating apparatus by using a trigger instruction, and the database operating apparatus may acquire the service logic code according to the name.

Optionally, the service logic code may be a storage procedure, or may be implemented in other manners. If the service logic code is a storage procedure, the execution speed is higher because all statements in the storage procedure have been compiled. In use, only the name of the storage procedure and necessary parameters need to be transmitted, thereby consuming only a small amount of network traffic.

An inventory reduction transaction is used as an example below. SQL codes of the inventory reduction transaction are as follows, and words in brackets are annotations:

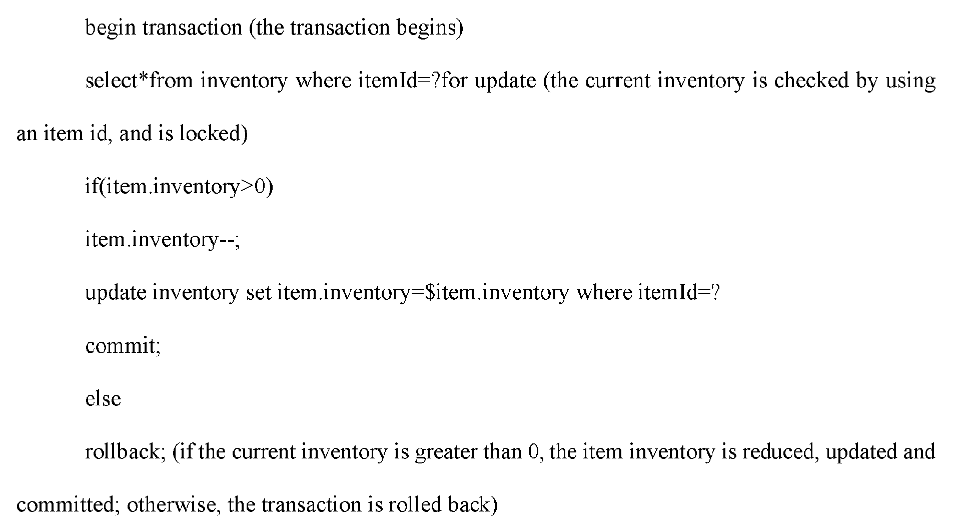

The inventory reduction transaction may be encapsulated into a procedure, and the procedure may be named buySth(long itemId). The procedure returns true/false to indicate whether the inventory reduction transaction succeeds. Pseudocodes of the procedure are as follows:
procedure:

```
 boolean buySth(long itemId){
 Item item=executeQuery(" select*from inventory where itemId=?for update");
 if(item .inventory>0) {
 item .inventory --;
 executeUpdate(update inventory set item.inventory=$item.inventory where itemId=?)
 commit();
 return true;
 }else{
 rollback();
 return false;
 }
```

As shown from the above that the foregoing storage procedure into which the inventory reduction transaction is encapsulated includes database operating instructions in the inventory reduction transaction, some instructions of the storage procedure itself, and also service logic of the inventory reduction transaction.

Specifically, when needing to execute the target transaction, the user may send a trigger instruction to instruct execution of the target transaction. The database operating apparatus acquires, according to the trigger instruction of the user, the service logic code into which the target transaction is encapsulated. Optionally, the trigger instruction may include a name of the service logic code, or there is a mapping relationship between the trigger instruction and the name of the service logic code. In total, the database operating apparatus may acquire, according to the trigger instruction, the service logic code into which the target transaction is encapsulated.

After acquiring the service logic code, the database operating apparatus speculatively executes the target transaction according to the service logic code, and records a segmentation condition and an involved data range of the target transaction that are obtained in the process of the speculative execution. The segmentation condition of the target transaction is used for indicating which database or databases are related to the target transaction. For example, the segmentation condition of the target transaction may be denoted by such information as a partition key (PartitionKey). That is, the determination of a list of PartitionKeys in the process of the speculative execution of the target transaction is equivalent to the determination of the segmentation condition of the target transaction. The involved data range of the target transaction is used for indicating which piece or pieces of data in the database, to which the segmentation condition is directed, is/are specifically related to the target transaction. For example, data related to the target transaction may be denoted by such information as primary keys (PrimaryKeys) of the data. That is, the determination of a list of Primary Keys in the process of the speculative execution of the target transaction is equivalent to the determination of the involved data range of the target transaction.

The process of the database operating apparatus speculatively executing the target transaction according to the service logic code is actually: running an instruction in the service logic code, and when the instruction is a database operating instruction in the target transaction encapsulated in the service logic code, speculatively executing the database operating instruction to implement speculative execution of the target transaction. In the process of speculatively executing the database operating instruction in the run target transaction, the database operating apparatus may determine, according to the result of the speculative execution, a next database operating instruction that needs to be executed.

Operations performed by the database operating instructions on the database are mainly for accessing data in the database. Therefore, a data environment of the database operating instruction may be simulated, and the database operating instruction is speculatively executed based on the simulated data environment. On this basis, the database operating instruction is speculatively executed in the following manner: simulating a data environment of the database operating instruction in a locally created memory library, and speculatively executing the database operating instruction based on the simulated data environment.

Further, an implementation of simulating a data environment of the database operating instruction in a locally created memory library, and speculatively executing the database operating instruction based on the simulated data environment includes the following steps:
The acquired database operating instruction is split into a read instruction and a write instruction; the read instruction is run on the real database, that is, the read instruction is executed in the database to acquire a read data set (ReadSet). The read data set is stored into a local memory library, to simulate a data environment required for the database operating instruction. Then, the write instruction is applied to the memory library, to realize speculative execution of the database operating instruction, that is, the write instruction is executed in the memory library to modify the read data set. For example, relevant data in the read data set is updated, queried, or otherwise processed. A resultant data set (affectRowInMemdb) may be generated after the write instruction is executed to modify the read data set.

In the foregoing process of the speculative execution, each time the database operating apparatus speculatively executes a database operating instruction, PrimaryKeys and PartitionKey in the read data set read by the database operating instruction are recorded locally. Optionally, the database operating apparatus may also record the entire read data set and the resultant data set including information such as a version number corresponding to the primary key, but the present disclosure is not limited thereto.

PrimaryKeys in the read data set reflects an involved data range of the target transaction, and PartitionKey in the read data set reflects a database or databases to which the data involved in the target transaction is distributed, and therefore may be used as a segmentation condition of the target transaction.

The database operating apparatus continues to run the service logic code. When the apparatus proceeds to a transaction commit instruction (such as the foregoing commit()) in the target transaction included in the service logic code, "true" may be returned, indicating that the speculative execution succeeds. On the contrary, if the apparatus proceeds to a transaction rollback instruction (such as the foregoing rollback()) in the target transaction included in the service logic code, "false" may be returned, indicating that the speculative execution fails.

The database operating apparatus controls the database to which the segmentation condition of the target transaction acquired in the process of the speculative execution is directed to actually execute the target transaction according to the service logic code as well as the segmentation condition and the involved data range of the target transaction that are obtained in the process of the speculative execution, when the speculative execution succeeds.

In a specific implementation, the database operating apparatus may issue a name of the service logic code to the database to instruct the database to run the service logic code to actually execute the target transaction, and may receive a segmentation condition and an involved data range of the target transaction that are obtained in the process of actual execution and returned by the database. If the segmentation condition and the involved data range of the target transaction that are obtained in the process of actual execution are both the same as the segmentation condition and the involved data range of the target transaction that are obtained in the speculative execution, the database operating apparatus may issue a transaction commit instruction to the database, for the database to commit the target transaction. If at least one of the segmentation condition and the involved data range of the target transaction that are obtained in the process of actual execution is different from the segmentation condition and the involved data range of the target transaction that are obtained in the speculative execution, the database operating apparatus may issue a transaction rollback instruction to the database, for the database to roll back the target transaction.

In another specific implementation, the database operating apparatus may issue a name of the service logic code as well as the segmentation condition and the involved data range of the target transaction that are obtained in the process of the speculative execution to the database to instruct the database to run the service logic code to actually execute the target transaction, and commit the target transaction when a segmentation condition and an involved data range of the target transaction that are obtained in the process of actual execution are both the same as the segmentation condition and the involved data range of the target transaction that are obtained in the speculative execution, or roll back the target transaction when at least one of the segmentation condition and the involved data range of the target transaction that are obtained in the process of actual execution is different from the segmentation condition and the involved data range of the target transaction that are obtained in the speculative execution

Optionally, in order to reduce the number of interactions between the database operating apparatus and the database and save network resources, the name of the service logic code as well as the segmentation condition and the involved data range of the target transaction that are obtained in the process of the speculative execution may be issued to the database simultaneously (together).

Compared with a pure procedure solution, the present disclosure adds a process of the speculative execution, so that the segmentation condition and the involved data range of the target transaction are obtained in advance, and a database or databases on which the target transaction should be executed may be determined.

On one hand, based on the speculated segmentation condition of the target transaction, whether the target transaction is a stand-alone transaction or a distributed transaction is determined in advance. If the target transaction is determined as a stand-alone transaction, the database may be controlled to actually execute the target transaction according to stand-alone transaction processing logic. If the target transaction is determined as a distributed transaction, the database may be controlled to actually execute the target transaction according to distributed transaction processing logic. The distributed transaction processing logic and the stand-alone transaction processing logic are different. The stand-alone transaction processing logic is relatively simple, for example, it does not involve issues such as read/write locking, and therefore fewer resources are consumed. On this basis, by identifying whether the target transaction is a stand-alone transaction and processing the target transaction according to the stand-alone transaction processing logic when the target transaction is identified as a stand-alone transaction, this example helps improve processing efficiency, increase transaction throughput, and reduce processing costs.

On the other hand, data may be prepared in advance based on the speculated segmentation condition and involved data range of the target transaction. For example, all cross-node data is preloaded from a "lower-level disk storage" of other databases or the local database, thereby helping improve the transaction execution efficiency and further increasing the transaction throughput.

In addition, the present disclosure provides a pure speculative execution solution, which mainly refers to a speculative execution solution in which an application server controls execution logic of the target transaction. In this solution, in the process of executing the target transaction by the application server, database operating instructions of the target transaction that the application server proceeds to are acquired in sequence. The database operating instruction is speculatively executed, and the speculative execution result is returned to the application server, so that the application server may determine a database operating instruction that needs to be executed, and locally record the database operating instruction and speculative execution data generated during the speculative execution. When a transaction commit instruction in the target transaction is acquired, a database corresponding to the application server is controlled to actually execute the target transaction according to the locally recorded database operating instruction and the speculative execution data. The method of controlling the database corresponding to the application server to actually execute the target transaction may include: issuing the locally recorded database operating instruction to the database to instruct the database to execute the database operating instruction; if the actual execution result is the same as the speculative execution result, committing the target transaction; and if the actual execution result is different from the speculative execution result, rolling back the target transaction.

Transactions are concurrent in the process of the speculative execution, and are sequentially executed in series during actual execution in the database. Therefore, two transactions operating the same data may be correct in the speculative execution stage. However, in the actual execution stage, whichever transaction is executed first, the other transaction will be rolled back because the speculative execution result is different from the actual execution result as the data has changed, resulting in a high rollback probability.

For example, it is assumed that there are two transactions: transaction 1 and transaction 2, and both transactions are reading the value of key and assigning the value to id. If id=0, id is incremented by 1 and id+1 is used as a new value of key. In the process of the speculative execution, because values in the database are not changed, both transactions may read key=0 and assign the value to id; moreover, because id=0, the second statement may be executed successfully, that is, id is incremented by 1 and id+1 is assigned to key, i.e., speculative execution results of both transactions are key=1. However, in the process of actual execution, the two transactions need to be executed in series. It is assumed that transaction 1 is performed first and then transaction 2 is performed. In this case, transaction 1 may read id=0, increment id by 1 and assign id+1 to key so that key=1. When transaction 2 is executed, key=1 is read and the value is assigned to id so that id=1, and then id is incremented by 1 and id+1 is assigned to key so that key=2. By comparing the actual execution results with the speculative execution results of the two transactions, the actual execution result and the speculative execution result of transaction 2 are different, and therefore transaction 2 needs to be rolled back. However, in fact, if the database may obtain the service logic of transaction 2, the second statement does not need to be executed when id>0, that is, it is unnecessary to execute the operation of incrementing id by 1 and assigning id+1 to key. In this case, the obtained execution result is still key=1, so that transaction 2 does not need to be rolled back.

Compared with the pure speculative execution solution, the present disclosure adds the procedure solution and makes full use of the advantages of the procedure solution. The database may acquire service logic of the target transaction in the process of actual execution and execute the target transaction according to the service logic of the target transaction. Therefore, the database does not need to be concerned about changes in a shared data set (i.e., data in the database). Serial and correct execution of the transaction may be ensured as long as the segmentation condition and the involved data range of the target transaction do not change, which may solve the rollback phenomenon in the pure speculative execution solution to some extent, thus helping reduce the rollback probability and improve the transaction execution efficiency.

The foregoing inventory reduction transaction is still used as an example in the following, to illustrate the working procedure of the technical solution of the present disclosure in detail.

SQL codes of the inventory reduction transaction are described as above, and pseudocodes of a procedure into which the inventory reduction transaction is encapsulated are also described as above.

In a process of actual execution, a database operating apparatus (or referred to as an execution server) acquires the foregoing procedure according to a trigger instruction of a user, and then runs the procedure.

First, the database operating apparatus creates a memory library locally.

When proceeding to the SQL statement: select*from inventory where itemId=?for update, the database operating apparatus directly searches for the SQL statement in the database, records the result of this query (that is, to-be-processed data that is found, i.e., the current inventory quantity) in the local memory library, and at the same time records PrimaryKeys and PartitionKey involved in this query.

It should be noted that the SQL statement is a query statement; therefore, the result remains unchanged whether the statement is split or not. To simplify the operation, the query statement may not be split.

The database operating apparatus determines whether the query result is greater than 0. If yes, the database operating apparatus reduces the current inventory quantity, and executes an update statement, that is, update inventory set item.inventory=$item.inventory where itemId=?; if no, the database operating apparatus rolls back the statement.

If proceeding to a rollback statement, the database operating apparatus clears the local memory library. In this case, because the transaction is not executed in the database, the database does not need to execute a rollback operation.

If proceeding to an update statement, i.e., update inventory set item.inventory=?where itemId=?, the database operating apparatus splits the SQL statement into a database read instruction, i.e., select*from inventory where itemId=?, and a database write instruction, i.e., update inventory set item.inventory=?where itemId=?. Then, the database operating apparatus issues the statement select*from inventory where itemId=? to the database, to obtain a read data set, and writes data in the read data set to the local memory library. Next, the database operating apparatus performs an update operation in the local memory library according to the statement update inventory set item.inventory=?where itemId=?, to obtain a resultant data set, and at the same time, records PrimaryKeys in the read resultant set and corresponding version number information, and records PartitionKey.

After executing a commit instruction, the database operating apparatus returns a value "true", and executes all the aforementioned instructions together with the transaction again in a lower-level database (this execution is actual execution).

After finishing the foregoing procedure, the database operating apparatus will obtain the following transaction execution template:
invoked procedure:
boolean buySth(long itemId)
corresponding parameter: itemId=xxx
corresponding PartitionKey list=xxx.

Further, in the foregoing process of executing the procedure, PrimaryKeys in ReadSet and its corresponding version number information may further be recorded. This helps pre-load all cross-node data from other "lower-level databases" and "lower-level disk storages" of a local database according to the recorded PrimaryKeys before execution in the lower-level database. The manner of pre-loading cross-node data may load data in low-speed devices to memory in batches, play an important role in sequential execution of the procedure, and significantly improve the execution efficiency.

It should be noted that the foregoing method examples are all expressed as a series of action combinations for ease of description. However, those skilled in the art should know that the present disclosure is not limited by the described action sequence, because some steps may be performed in other sequences or simultaneously according to the present disclosure. Secondly, those skilled in the art should also know that the examples described in the specification are all preferred examples, and the actions and modules involved are not mandatory to the present disclosure.

In the foregoing examples, the description of each example has its own focus. For content that is not detailed in one example, reference may be made to the relevant description of another example.

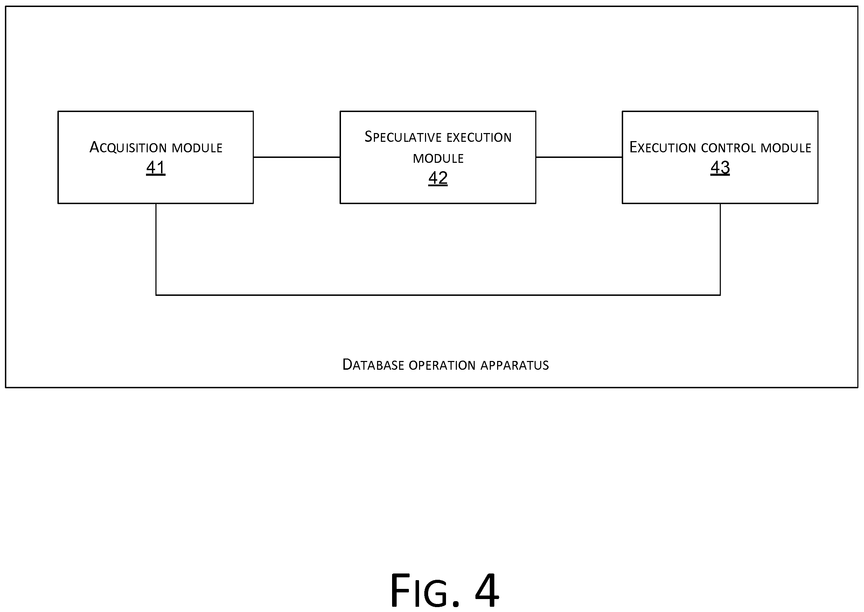

FIG. 4 is a schematic structural diagram of a database operating apparatus according to an example of the present disclosure. As shown in FIG. 4, the apparatus includes: an acquisition module 41, a speculative execution module 42, and an execution control module 43.

The acquisition module 41 is configured to execute a trigger instruction of a target transaction according to a user instruction, and acquire a service logic code into which the target transaction is encapsulated.

The speculative execution module 42 is configured to speculatively execute the target transaction according to the service logic code acquired by the acquisition module 41, and record a segmentation condition and an involved data range of the target transaction that are obtained in the process of the speculative execution.

The execution control module 43 is configured to, when the speculative execution performed by the speculative execution module 42 succeeds, control a database to which the segmentation condition is directed to actually execute the target transaction according to the service logic code as well as the segmentation condition and the involved data range of the target transaction that are obtained in the process of the speculative execution.

In an optional implementation, the speculative execution module 42 is specifically configured to:
run an instruction in the service logic code; and
when the instruction is a database operating instruction in the target transaction encapsulated in the service logic code, speculatively execute the database operating instruction.

Further, when speculatively executing the run database operating instruction, the speculative execution module 42 is specifically configured to:
if the database operating instruction is a database modification instruction, simulate a data environment of the database operating instruction in a locally created memory library, and speculatively execute the database operating instruction based on the simulated data environment; and
if the database operating instruction is not a database modification instruction, execute the database operating instruction in the database to speculatively execute the database operating instruction.

Furthermore, when simulating a data environment of the database operating instruction in a locally created memory library, and speculatively executing the database operating instruction based on the simulated data environment, the speculative execution module 42 is specifically configured to:
split the database operating instruction into a read instruction and a write instruction;
execute the read instruction in the database to acquire a read data set, and store the read data set into the memory library to simulate the data environment of the database operating instruction; and
execute the write instruction in the memory library to modify the read data set.

In an optional implementation, the execution control module 43 is specifically configured to:
issue a name of the service logic code to the database to instruct the database to run the service logic code to actually execute the target transaction, and receive a segmentation condition and an involved data range of the target transaction that are obtained in the process of actual execution and returned by the database;
issue a transaction commit instruction to the database for the database to commit the target transaction if the segmentation condition and the involved data range of the target transaction that are obtained in the process of actual execution are both the same as the segmentation condition and the involved data range of the target transaction that are obtained in the speculative execution; and
issue a transaction rollback instruction to the database for the database to roll back the target transaction if at least one of the segmentation condition and the involved data range of the target transaction that are obtained in the process of actual execution is different from the segmentation condition and the involved data range of the target transaction that are obtained in the speculative execution.

In another optional implementation, the execution control module 43 may be specifically configured to:
issue a name of the service logic code as well as the segmentation condition and the involved data range of the target transaction that are obtained in the process of the speculative execution to the database to instruct the database to run the service logic code to actually execute the target transaction, and commit the target transaction when a segmentation condition and an involved data range of the target transaction that are obtained in the process of actual execution are both the same as the segmentation condition and the involved data range of the target transaction that are obtained in the speculative execution, or roll back the target transaction when at least one of the segmentation condition and the involved data range of the target transaction that are obtained in the process of actual execution is different from the segmentation condition and the involved data range of the target transaction that are obtained in the speculative execution.

Further, the execution control module 43 may be specifically configured to:
issue the name of the service logic code as well as the segmentation condition and the involved data range of the target transaction that are obtained in the process of the speculative execution to the database simultaneously.

Optionally, the foregoing service logic code may be, but is not limited to, a storage procedure. The storage procedure may be implemented by using various languages, for example, MySQL, Java, or the like.

The database operating apparatus provided in this example is actually a logic processing apparatus, which may be deployed alone and located between the application server and the database, or may be deployed on the application server for implementation or deployed on the database for implementation.

The database operating apparatus provided in this example obtains, according to a trigger instruction of a user, a service logic code into which a target transaction is encapsulated; speculatively executes the target transaction according to the service logic code, and speculates a segmentation condition and an involved data range of the target transaction; and controls a database to which the segmentation condition is directed to actually execute the target transaction according to the service logic code as well as the target transaction of the target transaction and the involved data range that are obtained in the process of the speculative execution, when the speculative execution succeeds. The segmentation condition of the target transaction may be obtained through speculative execution, and a database or databases on which the target transaction should be executed may be determined, ensuring the certainty of database consumption. On one hand, whether the target transaction is a stand-alone transaction or a distributed transaction is determined in advance; on the other hand, data may be prepared in advance, thus helping improve the transaction execution efficiency and further increasing the transaction throughput.

In addition, the database operating apparatus in this example combines the speculative execution and the procedure. Compared with the pure speculative execution solution, the database operating apparatus may make full use of the advantages of the procedure solution. The database may see service logic of the target transaction in the process of actual execution and execute the target transaction according to the service logic of the target transaction. Therefore, the database does not need to worry about changes in a shared data set (i.e., data in the database). Serial and correct execution of the transaction may be ensured as long as the segmentation condition and the involved data range of the target transaction do not change, which may solve the rollback phenomenon in the pure speculative execution solution to some extent, thus helping reduce the rollback probability and improve the transaction execution efficiency.

Those skilled in the art should clearly understand that to make the description convenient and concise, for specific working processes of the aforementioned system, apparatus and units, reference may be made to the corresponding processes in the foregoing method examples. Details are not described here again.

In the several examples provided in the present disclosure, it should be understood that the disclosed system, apparatus and method may be implemented in other manners. For example, the apparatus examples described above are only exemplary. For example, division of the units is merely division based on logical functions and there may be other division manners in actual implementation. For example, a plurality of units or components may be combined or integrated into another system, or some features may be ignored or not performed. In addition, the mutual couplings or direct couplings or communication connections displayed or discussed may be implemented by using some interfaces, and the indirect couplings or communication connections between apparatuses or units may be implemented electrically, mechanically, or in another form.

The units described as separate parts may be or may not be physically separate. Parts displayed as units may be or may not be physical units, and may be located in one position or distributed on a plurality of network units. Some or all of the units may be selected according to actual needs to achieve the objectives of the solutions of the examples.

In addition, functional units in the examples of the present disclosure may be integrated into one processing unit, or each of the units may exist alone physically, or two or more units may be integrated into one unit. The integrated unit may be implemented in the form of hardware, or may be implemented in the form of hardware plus a software functional unit.

When the integrated unit is implemented in the form of a software functional unit, the integrated unit may be stored in a computer readable storage medium. The software functional unit is stored in a storage medium, and includes several instructions for instructing a computer device (which may be a personal computer, a server, a network device or the like) or a processor to perform all or some of the steps of the methods described in the examples of the present disclosure. The foregoing storage medium includes: any medium that may store program codes, such as a USB flash drive, a removable hard disk, a Read-Only Memory (ROM), a Random Access Memory (RAM), a magnetic disk, or an optical disc.

Finally, it should be noted that the foregoing examples are merely used for illustrating rather than limiting the technical solutions of the present disclosure. Although the present disclosure is described in detail with reference to the foregoing examples, those of ordinary skill in the art should understand that modifications may be made to the technical solutions described in the foregoing examples.

## Claims

1. A database operating method comprising:
executing a trigger instruction of a target transaction according to a user instruction to acquire a service logic code into which the target transaction is encapsulated (301), wherein the target transaction is a stand-alone or distributed transaction; and
conducting a speculative execution of the target transaction according to the service logic code by running instructions in the service logic code, wherein each time one of said instructions is a database operating instruction in the target transaction encapsulated in the service logic code, the method further comprises:
conducting the speculative execution of the database operating instruction;
recording a segmentation condition and an involved data range of the target transaction that are obtained in a process of conducting the speculative execution (302), the segmentation condition indicating which one or more databases are related to the target transaction and the data range indicating which at least one piece of data in the one or more databases to which the segmentation condition is directed is specifically related to the target transaction; and
if the speculative execution of the target transaction succeeds, controlling the one or more databases to which the segmentation condition is directed to execute the target transaction according to the service logic code, the segmentation condition and the involved data range of the target transaction that are obtained in the process of conducting of the speculative execution (303), wherein if the database operating instruction is a database modification instruction, a data environment of the database operating instruction is simulated in a locally created memory library, and conducting the speculative execution of the database operating instruction is based on the simulated data environment.

2. The method of claim 1, wherein the conducting the speculative execution of the database operating instruction comprises:
if the database operating instruction is not a database modification instruction, executing the database operating instruction in the one or more databases to conduct the speculative execution of the database operating instruction.

3. The method of claim 2, wherein the simulating the data environment of the database operating instruction in the locally created memory library, and conducting the speculative execution of the database operating instruction based on the simulated data environment comprises:
splitting the database operating instruction into a read instruction and a write instruction;
executing the read instruction in the one or more databases to acquire a read data set, and storing the read data set into the memory library to simulate the data environment of the database operating instruction; and
executing the write instruction in the memory library to modify the read data set.

4. The method of any of claims 1 to 3, wherein the controlling the one or more databases to which the segmentation condition is directed to actually execute the target transaction according to the service logic code as well as the segmentation condition and the involved data range of the target transaction that are obtained in the process of the speculative execution comprises:
issuing a name of the service logic code to the one or more databases to instruct the one or more databases to run the service logic code to actually execute the target transaction and receive a segmentation condition and an involved data range of the target transaction that are obtained in a process of actual execution and returned by the one or more databases;
issuing a transaction commit instruction to the one or more databases to commit the target transaction if the segmentation condition and the involved data range of the target transaction that are obtained in the process of actual execution are both the same as the segmentation condition and the involved data range of the target transaction that are obtained in the speculative execution; and
issuing a transaction rollback instruction to the one or more databases to roll back the target transaction if at least one of the segmentation condition and the involved data range of the target transaction that are obtained in the process of actual execution is different from the segmentation condition and the involved data range of the target transaction that are obtained in the speculative execution.

5. The method of any of claims 1 to 4, wherein the controlling the one or more databases to which the segmentation condition is directed to actually execute the target transaction according to the service logic code as well as the segmentation condition and the involved data range of the target transaction that are obtained in the process of the speculative execution comprises:
issuing a name of the service logic code as well as the segmentation condition and the involved data range of the target transaction that are obtained in the process of the speculative execution to the one or more databases to instruct the one or more databases to run the service logic code to actually execute the target transaction, commit the target transaction when a segmentation condition and an involved data range of the target transaction that are obtained in a process of actual execution are both the same as the segmentation condition and the involved data range of the target transaction that are obtained in the speculative execution, or roll back the target transaction when at least one of the segmentation condition and the involved data range of the target transaction that are obtained in the process of actual execution is different from the segmentation condition and the involved data range of the target transaction that are obtained in the speculative execution.

6. The method of claim 5, wherein the issuing the name of the service logic code as well as the segmentation condition and the involved data range of the target transaction that are obtained in the process of the speculative execution to the one or more databases comprises:
issuing the name of the service logic code as well as the segmentation condition and the involved data range of the target transaction that are obtained in the process of the speculative execution to the one or more databases simultaneously.

7. The method of any of claims 1 to 6, wherein the service logic code is a storage procedure.

8. A database operating apparatus comprising:
an acquisition module (41) configured to execute a trigger instruction of a target transaction according to a user instruction to acquire a service logic code into which the target transaction is encapsulated, wherein the target transaction is a stand-alone or distributed transaction;
a speculative execution module configured (42) to
conduct a speculative execution of the target transaction according to the service logic code by running instructions in the service logic code,
wherein each time one of said instructions is a database operating instruction in the target transaction encapsulated in the service logic code, the speculative execution module is configured (42) to conduct the speculative execution of the database operating instruction, and if the database operating instruction is a database modification instruction, to simulate a data environment of the database operating instruction in a locally created memory library, and conduct the speculative execution of the database operating instruction based on the simulated data environment; and
record a segmentation condition and an involved data range of the target transaction that are obtained in a process of conducting the speculative execution, the segmentation condition indicating which one or more databases are related to the target transaction and the data range indicating which at least one piece of data in the one or more databases to which the segmentation condition is directed is specifically related to the target transaction;
and
an execution control module (43) configured to control the one or more databases to which the segmentation condition is directed to actually execute the target transaction according to the service logic code as well as the segmentation condition and the involved data range of the target transaction that are obtained in the process of the speculative execution, when the speculative execution of the target transaction succeeds.

9. The apparatus of claim 8, wherein the speculative execution module (42) is specifically configured to:
if the database operating instruction is not a database modification instruction, execute the database operating instruction in the one or more databases to conduct the speculative execution of the database operating instruction.

10. The apparatus of claim 9, wherein the speculative execution module (42) is specifically configured to:
split the database operating instruction into a read instruction and a write instruction;
execute the read instruction in the one or more databases to acquire a read data set, and store the read data set into the memory library to simulate the data environment of the database operating instruction; and
execute the write instruction in the memory library to modify the read data set.

11. The apparatus of any of claims 8 to 10, wherein the execution control module (43) is specifically configured to:
issue a name of the service logic code to the one or more databases to instruct the one or more databases to run the service logic code to actually execute the target transaction, and receive a segmentation condition and an involved data range of the target transaction that are obtained in a process of actual execution and returned by the one or more databases;
issue a transaction commit instruction to the database to commit the target transaction if the segmentation condition and the involved data range of the target transaction that are obtained in the process of actual execution are both the same as the segmentation condition and the involved data range of the target transaction that are obtained in the speculative execution; and
issue a transaction rollback instruction to the one or more databases to roll back the target transaction if at least one of the segmentation condition and the involved data range of the target transaction that are obtained in the process of actual execution is different from the segmentation condition and the involved data range of the target transaction that are obtained in the speculative execution.

12. The apparatus of any of claims 8 to 11, wherein the execution control module (43) is specifically configured to:
issue a name of the service logic code as well as the segmentation condition and the involved data range of the target transaction that are obtained in the process of the speculative execution to the one or more databases to instruct the one or more databases to run the service logic code to actually execute the target transaction, commit the target transaction when a segmentation condition and an involved data range of the target transaction that are obtained in a process of actual execution are both the same as the segmentation condition and the involved data range of the target transaction that are obtained in the speculative execution, or roll back the target transaction when at least one of the segmentation condition and the involved data range of the target transaction that are obtained in the process of actual execution is different from the segmentation condition and the involved data range of the target transaction that are obtained in the speculative execution.

13. The apparatus of claim 12, wherein the execution control module (43) is specifically configured to:
issue the name of the service logic code as well as the segmentation condition and the involved data range of the target transaction that are obtained in the process of the speculative execution to the one or more databases simultaneously.

14. A machine readable medium containing instructions which when read by a computer cause that computer to perform the method of any of claims 1 to 7.

## Patentansprüche

1. Datenbankbetriebsverfahren, umfassend:
Ausführen einer Auslöseanweisung einer Zieltransaktion gemäß einer Benutzeranweisung, um einen Dienstlogikcode zu beziehen, in den die Zieltransaktion gekapselt ist (301), wobei die Zieltransaktion eine eigenständige oder verteilte Transaktion ist; und
Durchführen einer spekulativen Ausführung der Zieltransaktion gemäß dem Dienstlogikcode, indem Anweisungen in dem Dienstlogikcode ausgeführt werden, wobei jedes Mal, wenn eine der Anweisungen eine Datenbankbetriebsanweisung in der Zieltransaktion ist, die in den Dienstlogikcode gekapselt ist, das Verfahren ferner umfasst:
Durchführen der spekulativen Ausführung der Datenbankbetriebsanweisung;
Aufzeichnen einer Segmentierungsbedingung und eines involvierten Datenbereichs der Zieltransaktion, die in einem Prozess erhalten werden, bei dem die spekulative Ausführung (302) durchgeführt wird, wobei die Segmentierungsbedingung angibt, welche von ein oder mehreren Datenbanken mit der Zieltransaktion in Beziehung stehen, und der Datenbereich angibt, welches wenigstens eine Datenelement in den ein oder mehreren Datenbanken, auf die sich die Segmentierungsbedingung richtet, in spezifischer Beziehung zu der Zieltransaktion steht; und falls die spekulative Ausführung der Zieltransaktion erfolgreich ist, Steuern der ein oder mehreren Datenbanken, auf die sich die Segmentierungsbedingung richtet, um die Zieltransaktion gemäß dem Dienstlogikcode, der Segmentierungsbedingung und dem involvierten Datenbereich der Zieltransaktion, die in dem Prozess des Durchführens der spekulativen Ausführung (303) erhalten werden, durchzuführen, wobei, falls die Datenbankbetriebsanweisung eine Datenbankmodifikationsanweisung ist, eine Datenumgebung der Datenbankbetriebsanweisung in einer lokal erstellten Speicherbibliothek simuliert wird, und das Durchführen der spekulativen Ausführung der Datenbankbetriebsanweisung auf der simulierten Datenumgebung basiert.

2. Verfahren nach Anspruch 1, wobei das Durchführen der spekulativen Ausführung der Datenbankbetriebsanweisung umfasst:
falls die Datenbankbetriebsanweisung keine Datenbankmodifikationsanweisung ist, Ausführen der Datenbankbetriebsanweisung in den ein oder mehreren Datenbanken, um die spekulative Ausführung der Datenbankbetriebsanweisung durchzuführen.

3. Verfahren nach Anspruch 2, wobei das Simulieren der Datenumgebung der Datenbankbetriebsanweisung in der lokal erstellten Speicherbibliothek und das Durchführen der spekulativen Ausführung der Datenbankbetriebsanweisung basierend auf der simulierten Datenumgebung umfasst:
Aufteilen der Datenbankbetriebsanweisung in eine Leseanweisung und eine Schreibanweisung;
Ausführen der Leseanweisung in den ein oder mehreren Datenbanken, um einen gelesenen Datensatz zu beziehen, und Speichern des gelesenen Datensatzes in der Speicherbibliothek, um die Datenumgebung der Datenbankbetriebsanweisung zu simulieren; und
Ausführen der Schreibanweisung in der Speicherbibliothek, um den gelesenen Datensatz zu modifizieren.

4. Verfahren nach einem der Ansprüche 1 bis 3, wobei das Steuern der ein oder mehreren Datenbanken, auf die sich die Segmentierungsbedingung richtet, um die Zieltransaktion gemäß dem Dienstlogikcode sowie der Segmentierungsbedingung und dem involvierten Datenbereich der Zieltransaktion, die in dem Prozess der spekulativen Ausführung erhalten werden, tatsächlich auszuführen, umfasst:
Ausgeben eines Namens des Dienstlogikcodes an die ein oder mehreren Datenbanken, um die ein oder mehreren Datenbanken anzuweisen, den Dienstlogikcode auszuführen, um die Zieltransaktion tatsächlich auszuführen, und Empfangen einer Segmentierungsbedingung und eines involvierten Datenbereichs der Zieltransaktion, die in einem Prozess der tatsächlichen Durchführung erhalten werden und von den ein oder mehreren Datenbanken zurückgegeben werden;
Ausgeben einer Transaktionsübergabeanweisung an die ein oder mehreren Datenbanken, um die Zieltransaktion festzuschreiben (commit), falls die Segmentierungsbedingung und der involvierte Datenbereich der Zieltransaktion, die in dem Prozess der tatsächlichen Ausführung erhalten werden, beide mit der Segmentierungsbedingung und dem involvierten Datenbereich der Zieltransaktion, die in der spekulativen Ausführung erhalten werden, identisch sind; und
Ausgeben einer Transaktionsrücksetzanweisung an die ein oder mehreren Datenbanken, um die Zieltransaktion rückgängig zu machen (rollback), falls wenigstens eines von der Segmentierungsbedingung und dem involvierten Datenbereich der Zieltransaktion, die in dem Prozess der tatsächlichen Ausführung erhalten werden, von der Segmentierungsbedingung und dem involvierten Datenbereich der Zieltransaktion, die in der spekulativen Ausführung erhalten werden, verschieden sind.

5. Verfahren nach einem der Ansprüche 1 bis 4, wobei das Steuern der ein oder mehreren Datenbanken, auf die sich die Segmentierungsbedingung richtet, um die Zieltransaktion gemäß dem Dienstlogikcode sowie der Segmentierungsbedingung und dem involvierten Datenbereich der Zieltransaktion, die in dem Prozess der spekulativen Ausführung erhalten werden, tatsächlich auszuführen, umfasst:
Ausgeben eines Namens des Dienstlogikcodes sowie der Segmentierungsbedingung und des involvierten Datenbereichs der Zieltransaktion, die in dem Prozess der spekulativen Ausführung erhalten werden, an die ein oder mehreren Datenbanken, um die ein oder mehreren Datenbanken anzuweisen, den Dienstlogikcode auszuführen, um die Zieltransaktion tatsächlich auszuführen, die Zieltransaktion festzuschreiben, wenn eine Segmentierungsbedingung und ein involvierter Datenbereich der Zieltransaktion, die in einem Prozess der tatsächlichen Ausführung erhalten werden, beide mit der Segmentierungsbedingung und dem involvierten Datenbereich der Zieltransaktion, die in der spekulativen Ausführung erhalten werden, identisch sind, oder Rücksetzen der Zieltransaktion, wenn wenigstens eines von der Segmentierungsbedingung und dem involvierten Datenbereich der Zieltransaktion, die in dem Prozess der tatsächlichen Ausführung erhalten werden, von der Segmentierungsbedingung und dem involvierten Datenbereich der Zieltransaktion, die in der spekulativen Ausführung erhalten werden, verschieden sind.

6. Verfahren nach Anspruch 5, wobei das Ausgeben des Namens des Dienstlogikcodes sowie der Segmentierungsbedingung und des involvierten Datenbereichs der Zieltransaktion, die in dem Prozess der spekulativen Ausführung erhalten werden, an die ein oder mehreren Datenbanken umfasst:
gleichzeitiges Ausgeben des Namens des Dienstlogikcodes sowie der Segmentierungsbedingung und des involvierten Datenbereichs der Zieltransaktion, die in dem Prozess der spekulativen Ausführung erhalten werden, an die ein oder mehreren Datenbanken.

7. Verfahren nach einem der Ansprüche 1 bis 6, wobei der Dienstlogikcode eine Speicherprozedur ist.

8. Datenbankbetriebseinrichtung, umfassend:
ein Erfassungsmodul (41), das dafür ausgelegt ist, eine Auslöseanweisung einer Zieltransaktion gemäß einer Benutzeranweisung auszuführen, um einen Dienstlogikcode zu beziehen, in den die Zieltransaktion gekapselt ist, wobei die Zieltransaktion eine eigenständige oder verteilte Transaktion ist;
ein spekulatives Ausführungsmodul (42), das dafür ausgelegt ist,
eine spekulative Ausführung der Zieltransaktion gemäß dem Dienstlogikcode durchzuführen, indem Anweisungen in dem Dienstlogikcode ausgeführt werden,
wobei jedes Mal, wenn eine der Anweisungen eine Datenbankbetriebsanweisung in der Zieltransaktion ist, die in den Dienstlogikcode gekapselt ist, das spekulative Ausführungsmodul (42) dafür ausgelegt, ist, die Ausführung der spekulativen Datenbankbetriebsanweisung durchzuführen, und, falls die Datenbankbetriebsanweisung eine Datenbankmodifikationsanweisung ist, eine Datenumgebung der Datenbankbetriebsanweisung in einer lokal erstellten Speicherbibliothek zu simulieren und die spekulative Ausführung der Datenbankbetriebsanweisung basierend auf der simulierten Datenumgebung durchzuführen; und
eine Segmentierungsbedingung und einen involvierten Datenbereich der Zieltransaktion, die in einem Prozess des Durchführens der spekulativen Ausführung erhalten werden, aufzuzeichnen, wobei die Segmentierungsbedingung angibt, welche von ein oder mehreren Datenbanken in Beziehung zu der Zieltransaktion stehen, und der Datenbereich angibt, welches wenigstens eine Datenelement in den ein oder mehreren Datenbanken, auf die sich die Segmentierungsbedingung richtet, in spezifischer Beziehung zu der Zieltransaktion steht; und
ein Ausführungssteuermodul (43), das dafür ausgelegt ist, die ein oder mehreren Datenbanken, auf die sich die Segmentierungsbedingung richtet, zu steuern, um die Zieltransaktion gemäß dem Dienstlogikcode sowie der Segmentierungsbedingung und dem involvierten Datenbereich der Zieltransaktion, die in dem Prozess der spekulativen Ausführung erhalten werden, tatsächlich auszuführen, wenn die spekulative Ausführung der Zieltransaktion erfolgreich ist.

9. Einrichtung nach Anspruch 8, wobei das spekulative Ausführungsmodul (42) insbesondere ausgelegt ist zum: falls die Datenbankbetriebsanweisung keine Datenbankmodifikationsanweisung ist, Ausführen der Datenbankbetriebsanweisung in den ein oder mehreren Datenbanken, um die spekulative Ausführung der Datenbankbetriebsanweisung durchzuführen.

10. Einrichtung nach Anspruch 9, wobei das spekulative Ausführungsmodul (42) insbesondere ausgelegt ist zum:
Aufteilen der Datenbankbetriebsanweisung in eine Leseanweisung und eine Schreibanweisung;
Ausführen der Leseanweisung in den ein oder mehreren Datenbanken, um einen gelesenen Datensatz zu beziehen, und Speichern des gelesenen Datensatzes in der Speicherbibliothek, um die Datenumgebung der Datenbankbetriebsanweisung zu simulieren; und
Ausführen der Schreibanweisung in der Speicherbibliothek, um den gelesenen Datensatz zu modifizieren.

11. Einrichtung nach einem der Ansprüche 8 bis 10, wobei das Ausführungssteuerungsmodul (43) insbesondere ausgelegt ist zum:
Ausgeben eines Namens des Dienstlogikcodes an die ein oder mehreren Datenbanken, um die ein oder mehreren Datenbanken anzuweisen, den Dienstlogikcode auszuführen, um die Zieltransaktion tatsächlich auszuführen, und Empfangen einer Segmentierungsbedingung und eines involvierten Datenbereichs der Zieltransaktion, die in einem Prozess der tatsächlichen Durchführung erhalten werden und von den ein oder mehreren Datenbanken zurückgegeben werden;
Ausgeben einer Transaktionsübergabeanweisung an die Datenbank, um die Zieltransaktion festzuschreiben (commit), falls die Segmentierungsbedingung und der involvierte Datenbereich der Zieltransaktion, die in dem Prozess der tatsächlichen Ausführung erhalten werden, beide mit der Segmentierungsbedingung und dem involvierten Datenbereich der Zieltransaktion, die in der spekulativen Ausführung erhalten werden, identisch sind; und
Ausgeben einer Transaktionsrücksetzanweisung an die ein oder mehreren Datenbanken, um die Zieltransaktion rückgängig zu machen (rollback), falls wenigstens eines von der Segmentierungsbedingung und dem involvierten Datenbereich der Zieltransaktion, die in dem Prozess der tatsächlichen Ausführung erhalten werden, von der Segmentierungsbedingung und dem involvierten Datenbereich der Zieltransaktion, die in der spekulativen Ausführung erhalten werden, verschieden sind.

12. Einrichtung nach einem der Ansprüche 8 bis 11, wobei das Ausführungssteuerungsmodul (43) insbesondere ausgelegt ist zum:
Ausgeben eines Namens des Dienstlogikcodes sowie der Segmentierungsbedingung und des involvierten Datenbereichs der Zieltransaktion, die in dem Prozess der spekulativen Ausführung erhalten werden, an die ein oder mehreren Datenbanken, um die ein oder mehreren Datenbanken anzuweisen, den Dienstlogikcode auszuführen, um die Zieltransaktion tatsächlich auszuführen, die Zieltransaktion festzuschreiben, wenn eine Segmentierungsbedingung und ein involvierter Datenbereich der Zieltransaktion, die in einem Prozess der tatsächlichen Ausführung erhalten werden, beide mit der Segmentierungsbedingung und dem involvierten Datenbereich der Zieltransaktion, die in der spekulativen Ausführung erhalten werden, identisch sind, oder Rücksetzen der Zieltransaktion, wenn wenigstens eines von der Segmentierungsbedingung und dem involvierten Datenbereich der Zieltransaktion, die in dem Prozess der tatsächlichen Ausführung erhalten werden, von der Segmentierungsbedingung und dem involvierten Datenbereich der Zieltransaktion, die in der spekulativen Ausführung erhalten werden, verschieden sind.

13. Einrichtung nach Anspruch 12, wobei das Ausführungssteuerungsmodul (43) insbesondere ausgelegt ist zum:
gleichzeitigen Ausgeben des Namens des Dienstlogikcodes sowie der Segmentierungsbedingung und des involvierten Datenbereichs der Zieltransaktion, die in dem Prozess der spekulativen Ausführung erhalten werden, an die ein oder mehreren Datenbanken.

14. Maschinenlesbares Medium, das Anweisungen enthält, die, wenn sie von einem Computer ausgelesen werden, den Computer veranlassen, das Verfahren nach einem der Ansprüche 1 bis 7 durchzuführen.

## Revendications

1. Procédé d'utilisation d'une base de données comprenant :
l'exécution d'une instruction de déclenchement d'une transaction cible selon une instruction de l'utilisateur afin d'acquérir un code logique de service dans lequel la transaction cible est encapsulée (301), dans lequel la transaction cible est une transaction autonome ou distribuée ; et
la réalisation d'une exécution spéculative de la transaction cible selon le code logique de service en exécutant des instructions dans le code logique de service, dans lequel chaque fois qu'une desdites instructions est une instruction d'utilisation de la base de données dans la transaction cible encapsulée dans le code logique de service, le procédé comprend en outre :
la réalisation de l'exécution spéculative de l'instruction d'utilisation de la base de données ;
l'enregistrement d'une condition de segmentation et d'une plage de données concernées de la transaction cible qui sont obtenues au cours du processus de l'exécution spéculative (302), la condition de segmentation indiquant les une ou plusieurs bases de données qui sont liées à la transaction cible et la plage de données indiquant quel au moins un élément de données dans les une ou plusieurs bases de données auxquelles s'applique la condition de segmentation est plus particulièrement lié à la transaction cible ; et
si l'exécution spéculative de la transaction cible réussit, la commande des une ou plusieurs bases de données auxquelles s'applique la condition de segmentation pour exécuter la transaction cible selon le code logique de service, la condition de segmentation et la plage de données concernées de la transaction cible qui sont obtenues au cours du processus de l'exécution spéculative (303), dans lequel si l'instruction d'utilisation de la base de données est une instruction de modification de la base de données, un environnement de données de l'instruction d'utilisation de la base de données est simulé dans une bibliothèque de mémoires créée localement, et la réalisation de l'exécution spéculative de l'instruction d'utilisation de la base de données est basée sur l'environnement de données simulé.

2. Procédé selon la revendication 1, dans lequel la réalisation de l'exécution spéculative de l'instruction d'utilisation de la base de données comprend :
si l'instruction d'utilisation de la base de données n'est pas une instruction de modification de la base de données, l'exécution de l'instruction d'utilisation de la base de données dans les une ou plusieurs bases de données pour mener l'exécution spéculative de l'instruction d'utilisation de la base de données.

3. Procédé selon la revendication 2, dans lequel la simulation de l'environnement de données de l'instruction d'utilisation de la base de données dans la bibliothèque de mémoires créée localement, et le fait de mener l'exécution spéculative de l'instruction d'utilisation de la base de données en fonction de l'environnement de données simulé comprennent :
la division de l'instruction d'utilisation de la base de données en une instruction de lecture et une instruction d'écriture ;
l'exécution de l'instruction de lecture dans les une ou plusieurs bases de données pour acquérir un ensemble de données lues, et le stockage de l'ensemble de données lues dans la bibliothèque de mémoires afin de simuler l'environnement de données de l'instruction d'utilisation de la base de données ; et
l'exécution de l'instruction d'écriture dans la bibliothèque de mémoires pour modifier l'ensemble de données lues.

4. Procédé selon l'une quelconque des revendications 1 à 3, dans lequel la commande des une ou plusieurs bases de données auxquelles s'applique la condition de segmentation pour exécuter réellement la transaction cible selon le code logique de service ainsi que la condition de segmentation et la plage de données concernées de la transaction cible qui sont obtenues au cours du processus de l'exécution spéculative comprend :
l'émission d'un nom de code logique de service aux une ou plusieurs bases de données pour donner aux une ou plusieurs bases de données l'instruction d'exécuter le code logique de service pour exécuter réellement la transaction cible et recevoir une condition de segmentation et une plage de données concernées de la transaction cible qui sont obtenues dans un processus de l'exécution réelle et renvoyées par les une ou plusieurs bases de données ;
l'émission d'une instruction de commettre une transaction vers les une ou plusieurs bases de données pour commettre la transaction cible si la condition de segmentation et la plage de données concernées de la transaction cible qui sont obtenues au cours du processus de l'exécution réelle sont toutes deux identiques à la condition de segmentation et à la plage de données concernées de la transaction cible obtenues au cours de l'exécution spéculative ; et
l'émission d'une instruction de reporter une transaction vers les une ou plusieurs bases de données pour reporter la transaction cible si au moins l'une de la condition de segmentation et de la plage de données concernées de la transaction cible qui sont obtenues dans le processus de l'exécution réelle est différente de la condition de segmentation et de la plage de données concernées de la transaction cible qui sont obtenues dans l'exécution spéculative.

5. Procédé selon l'une quelconque des revendications 1 à 4, dans lequel la commande des une ou plusieurs bases de données auxquelles s'applique la condition de segmentation pour exécuter réellement la transaction cible selon le code logique de service ainsi que la condition de segmentation et la plage de données concernées de la transaction cible qui sont obtenues au cours du processus de l'exécution spéculative comprend :
l'émission d'un nom du code logique de service ainsi que de la condition de segmentation et la plage de données concernées de la transaction cible qui sont obtenues au cours du processus de l'exécution spéculative vers les une ou plusieurs bases de données pour donner aux une ou plusieurs bases de données l'instruction d'exécuter le code logique de service pour exécuter réellement la transaction cible, de commettre la transaction cible lorsqu'une condition de segmentation et une plage de données concernées de la transaction cible qui sont obtenues au cours du processus de l'exécution réelle sont toutes deux identiques à la condition de segmentation et à la plage de données concernées de la transaction cible qui sont obtenues au cours de l'exécution spéculative, ou de reporter la transaction cible lorsqu'au moins l'une de la condition de segmentation et de la plage de données concernées de la transaction cible qui sont obtenues au cours du processus de l'exécution réelle est différente de la condition de segmentation et de la plage de données concernées de la transaction cible qui sont obtenues au cours de l'exécution spéculative.

6. Procédé selon la revendication 5, dans lequel l'émission du nom du code logique de service ainsi que de la condition de segmentation et de la plage de données concernées de la transaction cible qui sont obtenues au cours du processus de l'exécution spéculative vers les une ou plusieurs bases de données comprend :
l'émission du nom de code logique de service ainsi que de la condition de segmentation et de la plage de données concernées de la transaction cible qui sont obtenues au cours du processus de l'exécution spéculative vers les une ou plusieurs bases de données simultanément.

7. Procédé selon l'une quelconque des revendications 1 à 6, dans lequel le code logique de service est une procédure de stockage.

8. Appareil d'utilisation de base de données comprenant :
un module d'acquisition (41) configuré pour exécuter une instruction de déclenchement d'une transaction cible selon une instruction de l'utilisateur afin d'acquérir un code logique de service dans lequel la transaction cible est encapsulée, dans lequel la transaction cible est une transaction autonome ou distribuée ;
un module d'exécution spéculative (42) configuré pour
mener une exécution spéculative de la transaction cible selon le code logique de service en exécutant des instructions dans le code logique de service,
dans lequel chaque fois qu'une desdites instructions est une instruction d'utilisation de la base de données dans la transaction cible encapsulée dans le code logique de service, le module d'exécution spéculative est configuré (42) pour mener l'exécution spéculative de l'instruction d'utilisation de la base de données, et si l'instruction d'utilisation de la base de données est une instruction de modification de la base de données, pour simuler un environnement de données de l'instruction d'utilisation de la base de données dans une bibliothèque de mémoires créée localement, et mener l'exécution spéculative de l'instruction d'utilisation de la base de données en fonction de l'environnement de données simulé ; et
enregistrer une condition de segmentation et une plage de données concernées de la transaction cible qui sont obtenues au cours du processus de l'exécution spéculative, la condition de segmentation indiquant la ou les bases de données qui sont liées à la transaction cible et la plage de données indiquant l'au moins un élément de données dans les une ou plusieurs bases de données auxquelles s'applique la condition de segmentation qui est plus particulièrement lié à la transaction cible ;
et
un module de commande d'exécution (43) configuré pour commander les une ou plusieurs bases de données auxquelles s'applique la condition de segmentation pour exécuter réellement la transaction cible selon le code logique de service ainsi que la condition de segmentation et la plage de données concernées de la transaction cible qui sont obtenues au cours du processus de l'exécution spéculative, lorsque l'exécution spéculative de la transaction cible réussit.

9. Appareil selon la revendication 8, dans lequel le module d'exécution spéculative (42) est plus particulièrement configuré pour :
si l'instruction d'utilisation de la base de données n'est pas une instruction de modification de la base de données, exécuter l'instruction d'utilisation de la base de données dans les une ou plusieurs bases de données pour mener l'exécution spéculative de l'instruction d'utilisation de la base de données.

10. Appareil selon la revendication 9, dans lequel le module d'exécution spéculative (42) est plus particulièrement configuré pour :
diviser l'instruction d'utilisation de la base de données en une instruction de lecture et une instruction d'écriture ;
exécuter l'instruction de lecture dans les une ou plusieurs bases de données afin d'acquérir un ensemble de données lues, et stocker l'ensemble de données lues dans la bibliothèque de mémoires afin de simuler l'environnement de données de l'instruction d'utilisation de la base de données ; et
exécuter l'instruction d'écriture dans la bibliothèque de mémoires pour modifier l'ensemble des données lues.

11. Appareil selon l'une quelconque des revendications 8 à 10, dans lequel le module de commande d'exécution (43) est plus particulièrement configuré pour :
émettre un nom du code logique de service vers les une ou plusieurs bases de données pour donner aux une ou plusieurs bases de données l'instruction d'exécuter le code logique de service pour exécuter réellement la transaction cible, et recevoir une condition de segmentation et une plage de données concernées de la transaction cible qui sont obtenues au cours du processus de l'exécution réelle et renvoyées par les une ou plusieurs bases de données ;
émettre une instruction de commettre une transaction vers la base de données pour commettre la transaction cible si la condition de segmentation et la plage de données concernées de la transaction cible qui sont obtenues au cours du processus de l'exécution réelle sont toutes deux identiques à la condition de segmentation et à la plage de données concernées de la transaction cible qui sont obtenues au cours de l'exécution spéculative ; et
émettre une instruction de reporter une transaction vers les une ou plusieurs bases de données pour reporter la transaction cible si au moins l'une de la condition de segmentation et de la plage de données concernées de la transaction cible qui sont obtenues dans le processus de l'exécution réelle est différente de la condition de segmentation et de la plage de données concernées de la transaction cible qui sont obtenues dans l'exécution spéculative.

12. Appareil selon l'une quelconque des revendications 8 à 11, dans lequel le module de commande d'exécution (43) est plus particulièrement configuré pour :
émettre un nom du code logique de service ainsi que la condition de segmentation et la plage de données concernées de la transaction cible qui sont obtenues au cours du processus de l'exécution spéculative vers les une ou plusieurs bases de données pour donner aux une ou plusieurs bases de données l'instruction d'exécuter le code logique de service pour exécuter réellement la transaction cible, commettre la transaction lorsqu'une condition de segmentation et une plage de données concernées de la transaction cible qui sont obtenues au cours du processus de l'exécution réelle sont toutes deux identiques à la condition de segmentation et à la plage de données concernées de la transaction cible qui sont obtenues au cours de l'exécution spéculative, ou reporter la transaction cible lorsqu'au moins l'une de la condition de segmentation et de la plage de données concernées de la transaction cible qui sont obtenues au cours du processus de l'exécution réelle est différente de la condition de segmentation et de la plage de données concernées de la transaction cible qui sont obtenues au cours de l'exécution spéculative.

13. Appareil selon la revendication 12, dans lequel le module de commande d'exécution (43) est plus particulièrement configuré pour :
émettre le nom du code logique de service ainsi que la condition de segmentation et la plage de données concernées de la transaction cible qui sont obtenues au cours du processus de l'exécution spéculative vers les une ou plusieurs bases de données simultanément.

14. Support lisible par machine contenant des instructions qui, lorsqu'elles sont lues par un ordinateur, amènent cet ordinateur à mettre en oeuvre le procédé selon l'une quelconque des revendications 1 à 7.
